# EUROPÄISCHE PATENTANMELDUNG

(11) **EP 1 306 180 A1**
(43) Veröffentlichungstag der Anmeldung: **02.05.2003**
(21) Anmeldenummer: 02021502.6
(22) Anmeldetag: 26.09.2002
(51) Int. Cl.: B29C 33/26

(54) **Kunststoff-Spritzgiessmaschine**

(30) Priorität: 24.10.2001 DE 10152392
(71) Anmelder: Krauss-Maffei Kunststofftechnik GmbH, 80997 München (DE)
(72) Erfinder: Laar, Erwin, 83607 Holzkirchen (DE)
(74) Vertreter: Zollner, Richard

(57) **Zusammenfassung**

Die Erfindung bezieht sich auf eine Schließeinheit für Kunststoff-Formmaschinen, insbesondere Reaktionsgießmaschinen.

Die Schließeinheit umfasst eine untere Formaufspannplatte (2) und eine obere Formaufspannplatte (4), die über ein Schwenklager (22) in eine geöffnete Stellung und in eine Verschlussstellung bewegbar sind und in der Verschlussstellung mittels einer Verriegelung (24) verriegelt werden können.

Erfindungsgemäß wird die obere Formaufspannplatte (4) mittels eines Kurbelantriebs (38, 42) verschwenkt, wobei vorzugsweise die Verschlussstellung der Schließeinheit einer Totpunktlage des Kurbelantriebs entspricht.

Die Realisierung des Antriebs als Kurbelantriebs hat den Vorteil, dass die Verschlusslage der Schließeinheit mit geringer Geschwindigkeit und hoher Kraft angefahren werden kann.

Die untere Formaufspannplatte (2) kann schwenkbar gelagert sein und Verriegelungselemente (14, 16) aufweisen, um die untere Formaufspannplatte in mindestens einer Schwenkposition zu arretieren. Ferner können Riegelelemente (18, 26) vorgesehen sein, die die obere Formaufspannplatte in der Öffnungsposition an der unteren Formaufspannplatte verriegeln. Bei dem erfindungsgemäßen Aufbau ist es möglich, mit einem einzigen Motor die Schließeinheit zu öffnen, zu verschließen und zu verschwenken.

## Beschreibung

Die Erfindung bezieht sich auf die Schließeinheit einer Kunststoffformmaschine mit einer oberen und einer unteren Formenaufspannplatte, die mit einer Antriebsvorrichtung zwischen einer Öffnungsstellung und einer Verschlussstellung relativ zueinander bewegbar sind.

Die Formenaufspannplatten dienen der Aufnahme von Formwerkzeugen mit Kavitäten, wobei in der Verschlussstellung in der Kavität ein Kunststoffformteil hergestellt wird. Dabei wird beispielsweise ein reaktives Kunststoffgemisch in die Kavität eingebracht, das in der geschlossenen Kavität ausreagiert.

Als Antriebsvorrichtungen zum Öffnen und Schließen der Schließeinheiten werden dabei beispielsweise Hydraulikantriebe, Kugelgewindespindeln oder Pneumatikantriebe verwendet. Hydraulikantriebe sind relativ aufwendig und bringen die Gefahr von Verunreinigung durch leckendes Hydraulikmittel mit sich, bei Kugelgewindeantrieben ist die Drehzahl und damit auch die Bewegungsgeschwindigkeit begrenzt, und Pneumatikantriebe sind problematisch hinsichtlich des Anfahrens, des Lastwechsels und des Abbremsens bei höheren Geschwindigkeiten.

Demgegenüber liegt der Erfindung die Aufgabe zugrunde, eine Schließeinheit anzugeben, die sich durch eine einfache Antriebsvorrichtung auszeichnet und die schnell und in kurzen Taktzeiten geöffnet bzw. geschlossen werden kann.

Die Lösung dieser Aufgabe erfolgt durch eine Schließeinheit mit den Merkmalen des Patentanspruchs 1; die abhängigen Ansprüche betreffen vorteilhafte Weiterentwicklungen der Erfindung.

Erfindungsgemäß wird vorgeschlagen, als Antriebsvorrichtung einen Kurbelantrieb einzusetzen, wobei vorzugsweise die Verschlussstellung der Schließeinheit einer Totpunktstellung des Kurbelantriebs entspricht.

Der Kurbelantrieb erreicht in den Endlagen (Totpunktstellung) hohe Kräfte bei geringer Geschwindigkeit bzw. Geschwindigkeit 0. Die Beschleunigung bzw. die Verzögerung des Formenträgers wird durch den mechanischen Aufbau erreicht, so dass keine aufwendigen Steuerungen oder Rampen erforderlich sind. Dadurch kann der Motor zu Beginn eines Zyklus ohne Belastung bzw. nur mit geringer Belastung anlaufen, und er muss beim Anhalten in der Endlage nur das eigene Schwungmoment abbremsen. Wegen der Totpunktstellung in der Verschlussstellung ist ein exaktes Positionieren der Kurbel nicht nötig, und ein eventueller Nachlauf ist unkritisch.

Vorzugsweise entspricht die Öffnungsstellung einer weiteren Totpunktstellung des Kurbelantriebs, da in der Öffnungsstellung ein bewegter Formenträger angehalten werden muss und sich auch hier die Vorteile der Totpunktstellung auswirken.

Am einfachsten wird der Kurbelantrieb aus einem Antriebsstrang mit einem Kurbelarm und einem damit gelenkig verbundenen Hebel aufgebaut, wobei ein Ende des Antriebsstrangs an einer Formaufspannplatte und das andere Ende an der anderen Formaufspannplatte oder an einer Stütze am Grundgestell angreift.

Das Anbringen des Antriebsstrangs an einer Stütze hat insbesondere den Vorteil, dass mit einem einzigen Antrieb beide Formaufspannplatten gemeinsam verschwenkt werden können. Dazu sind vorzugsweise lösbare Verriegelungen zum Halten der Formenträger in der Verschlussstellung bzw. der Öffnungsstellung vorgesehen, wobei einer der Formenträger schwenkbar gegen ein Grundgestell gelagert ist und in mindestens einer Stellung arretierbar ist.

In einer Ausgestaltung sind die Formaufspannplatten an gegenüberliegenden Seiten mit lösbaren Schwenklagern ausgestattet, wobei der Antriebsstrang vorzugsweise mittig zwischen den Schwenklagern angreift. Wird bei dieser Ausgestaltung ein Schwenklager gelöst, so kann die Form zu dieser Seite hin geöffnet werden, wobei das andere Schwenklager als Drehpunkt dient. So kann beispielsweise von einer Seite etwas in die geöffnete Form eingelegt werden, und das gefertigte Kunststoffformteil kann von der anderen Seite her entnommen werden.

Weist die Schließeinheit ein festes Schwenklager auf, so greift der Antriebsstrang vorzugsweise seitlich des Schwenklagers an der der Öffnung der Schließeinheit abgewandten Seite an dem Formenträger an. Auf diese Weise ist die Öffnung der Schließeinheit von drei Seiten zugänglich.

Je nach Dimensionierung der Schließeinheit kann ein Kurbelantrieb ausreichend sein, oder es können mehrere erfindungsgemäße Kurbelantriebe eingesetzt werden.

Der erfindungsgemäße Kurbelantrieb ist insbesondere für den Einsatz bei Reaktionsgießmaschinen geeignet.

Ausführungsformen der Erfindung werden anhand der beigefügten Zeichnungen erläutert.

Es zeigen:
- Fig. 1: eine schematische Seitendarstellung einer geschlossenen Schließeinheit,
- Fig. 2: schematische Seitendarstellungen der Schließeinheit in verschiedenen Stellungen während eines Fertigungsprozesses und
- Fig. 3 - 7: verschiedene Modifikationen der Schließeinheit gemäß der Figur 1 in Darstellungen, die denen der Figur 2 entsprechen.

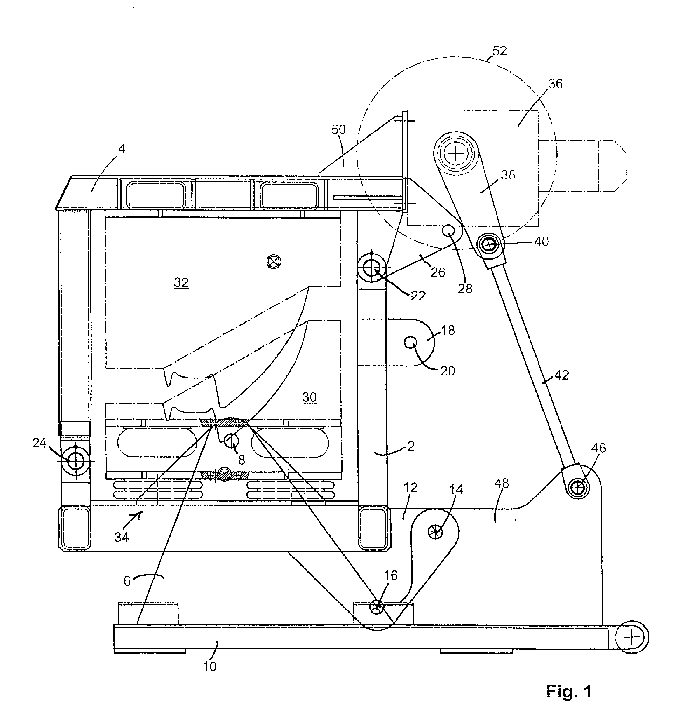

Fig. 1 zeigt eine Schließeinheit für Reaktionsgießmaschinen in der geschlossenen Position. Die Schließeinheit umfasst einen unteren Formenträger 2 und einen oberen Formenträger 4. Der untere Formenträger 2 ist in einem Schwenklager 8 an einem seitlich angeordneten Hauptträger 6 mit Bezug auf ein Maschinenbett 10 schwenkbar gelagert; entsprechende Elemente 6, 8 befinden sich an der gegenüberliegenden, nicht sichtbaren Seite der Schließeinheit.

Am unteren rechten Ende der Formaufspannplatte 2 ist eine etwa dreiecksförmige Verriegelungslasche 12 mit zwei Verriegelungsöffnungen 14, 16 befestigt. Eine weitere Verriegelungslasche 18 mit einer Verriegelungsöffnung 20 befindet sich oberhalb der Verriegelungslasche 12 an der Seite des Formenträgers 2. Die obere Formaufspannplatte 4 ist über ein Schwenklager 22 und eine lösbare Verriegelung 24 mit der unteren Formaufspannplatte 2 verbunden. An der rechten Seite der oberen Formaufspannplatte 4 ist eine Verriegelungslasche 26 mit einer Verriegelungsöffnung 28 befestigt.

Die Formaufspannplatten bilden im geschlossenen Zustand eine etwa quaderförmige Struktur und tragen im Inneren jeweils Formen 32, 38, die im vollständig geschlossenen Zustand eine Kavität zur Ausbildung des Kunststoffformteils bilden. Des weiteren ist in Figur 1 eine Parallelhubvorrichtung 34 dargestellt, mit der die untere Formhälfte 30 in Bezug auf den unteren Formenträger 2 zum Verschließen der Kavität parallel verschoben werden kann.

An der Oberseite der Formaufspannplatte 4 ist rechts über ein Befestigungselement 50 ein Motor 36 befestigt. Der Motor treibt einen Kurbelarm 38 an, der über ein Gelenk 40 mit einem Hebel 42 verbunden ist. Der Hebel 42 ist in einem Schwenklager 46 an einer Stütze 48 gelagert, der fest mit dem Maschinenbett 10 verbunden ist. Der aus dem Kurbelarm 38 und dem Hebel 42 gebildete Antriebsstrang ist im dargestellten Ausführungsbeispiel seitlich der Formaufspannplatte ausgebildet; dementsprechend kann bei Bedarf ein zweiter Antriebsstrang an der in der Zeichnung nicht sichtbaren Seite vorgesehen sein.

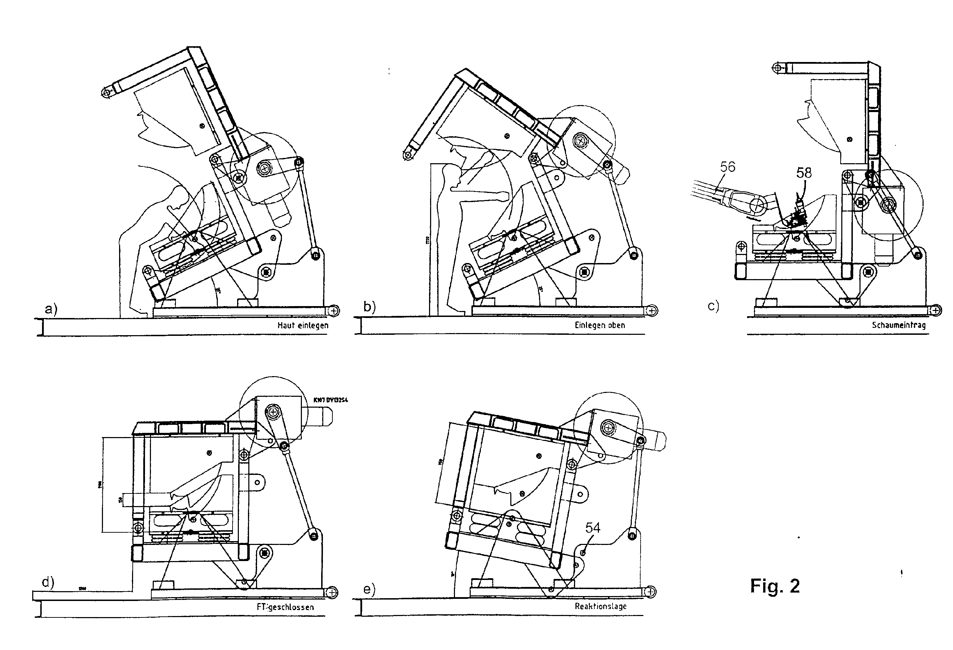

Die Betriebsweise der erfindungsgemäßen Schließeinheit wird anhand der Fig. 2 erläutert, in der aus Gründen der Übersichtlichkeit nur solche Elemente mit Bezugsziffern versehen sind, die nicht ohnehin schon beschrieben wurden; alle übrigen Bezugszeichen beziehen sich auf die in Fig. 1 dargestellten Elemente.

Ausgangspunkt für einen Produktionszyklus ist die in Fig. 2a dargestellte Stellung. In dieser Stellung ist die Schließeinheit vollständig geöffnet und um die Achse des Schwenklagers 8 nach links geneigt, damit eine Bedienungsperson beispielsweise eine Haut für das zu fertigende Kunststoffteil in die untere Form 30 einlegen kann. In dieser Stellung ist die untere Formaufspannplatte 2 über die Verriegelungsöffnung 16 und eine entsprechende Verriegelungsöffnung 54 (in Fig. 2e sichtbar) an der Stütze 48 verriegelt. Die Verriegelungslaschen 18 und 26 sind über die Verriegelungsöffnungen 20 und 28 miteinander verriegelt.

Falls es zum Einlegen von Einlegeteilen, einer weiteren Haut oder zum Reinigen der oberen Form 32 erforderlich ist, kann ausgehend von der Position der Fig. 2a die Schließeinheit in die Position der Fig. 2b gebracht werden, in der die Verriegelung der Laschen 26 und 18 gelöst wird und die obere Formaufspannplatte durch Drehung des Kurbelarms 38 in Uhrzeigerrichtung abgesenkt wird.

Anschließend wird die obere Formaufspannplatte 4 wieder in die Position der Fig. 2a gebracht, die Laschen 18 und 26 werden miteinander verriegelt, die Verriegelungsöffnung 16 wird entriegelt, und der Kurbelarm 38 wird in Gegenuhrzeigersinn vom Motor verschwenkt, bis der Antriebsstrang eine Totpunktstellung erreicht hat, in der der Kurbelarm 38 und die Hebel 42 überdeckend miteinander fluchten. In dieser Position (Fig. 2c) fluchtet die Verriegelungsöffnung 14 der unteren Formaufspannplatte 2 mit der Verriegelungsöffnung 54 der Stütze 48, und über diese Öffnungen werden die Lasche und die Stütze miteinander verriegelt.

Dann wird reaktionsfähiges Kunststoff-Schaummaterial über Zuleitungen 56 und einen Mischkopf 58 in an sich bekannter Weise in die untere Formhälfte 30 eingebracht. Anschließend wird die Verriegelung zwischen unterer und oberer Formaufspannplatte 2, 4 aufgehoben und durch Verdrehen des Kurbelarms wird die obere Formaufspannplatte 4 abgesenkt, bis der Antriebsstrang seine zweite Totpunktstellung erreicht hat, in der der Kurbelarm 38 und der Hebel 42 nicht überdeckend miteinander fluchten und die Schließeinheit geschlossen ist. Dabei wird die Verriegelung 24 geschlossen, so dass die Schließeinheit vollständig verriegelt ist.

Anschließend wird die Parallelhubvorrichtung 34 betätigt und schließt die Kavität der Formhälften 30, 32 (vgl. Fig. 2e). Optional kann dann die Form in eine in Fig. 2e dargestellte Reaktionslage gebracht werden, in der die geschlossene Schließeinheit um die Schwenkachse des Schwenklagers 8 nach rechts geneigt ist. Dazu wird die Verriegelung der Verriegelungsöffnung 14 aufgehoben, und der Kurbelarm wird im Gegenuhrzeigersinn verdreht. Die Reaktionslage wird im allgemeinen so gewählt, dass während der Reaktion entstehende Gase aus der Kavität austreten können, und die Reaktionslage kann bei Bedarf während der Reaktion geändert werden.

Nach Abschluss der Reaktion wird die Schließeinheit wieder in die aufrechte Stellung gebracht und dort verriegelt, die Verriegelung 24 wird gelöst, die obere Formaufspannplatte wird in die vollständig geöffnete Stellung bewegt und dort verriegelt, der untere Formenträger 2 wird entriegelt, und die geöffnete Schließeinheit wird in die Position der Fig. 2a verschwenkt, das fertige Kunststoffformteil wird entnommen und ein neuer Produktionszyklus kann beginnen.

Die vorstehend erwähnten Verriegelungen der Verriegelungsöffnungen 14, 16 und 54 bzw. 28 und 22 werden im einfachsten Fall durch Stifte hergestellt, die in die fluchtenden Öffnungen eingebracht werden. Das Verriegeln erfolgt dabei vorzugsweise automatisch, und die Stifte können elektromagnetisch, pneumatisch, hydraulisch oder mechanisch betätigt werden.

Im dargestellten Beispiel ist der Antrieb 36 seitlich des Schwenklagers 22 an der oberen Formaufspannplatte 4 angebracht und stellt somit ein Gegengewicht zum Rest der oberen Formaufspannplatte 4 dar, so dass ein Motor mit geringer Motorleistung verwendet werden kann.

In dem beschriebenen Ausführungsbeispiel ist nur ein Kurbelantrieb dargestellt; bei Bedarf können auch mehrere Kurbelantriebe pro Schließeinheit verwendet werden, die gleichzeitig von einem Motor angetrieben werden oder jeweils einen separaten Motor aufweisen können.

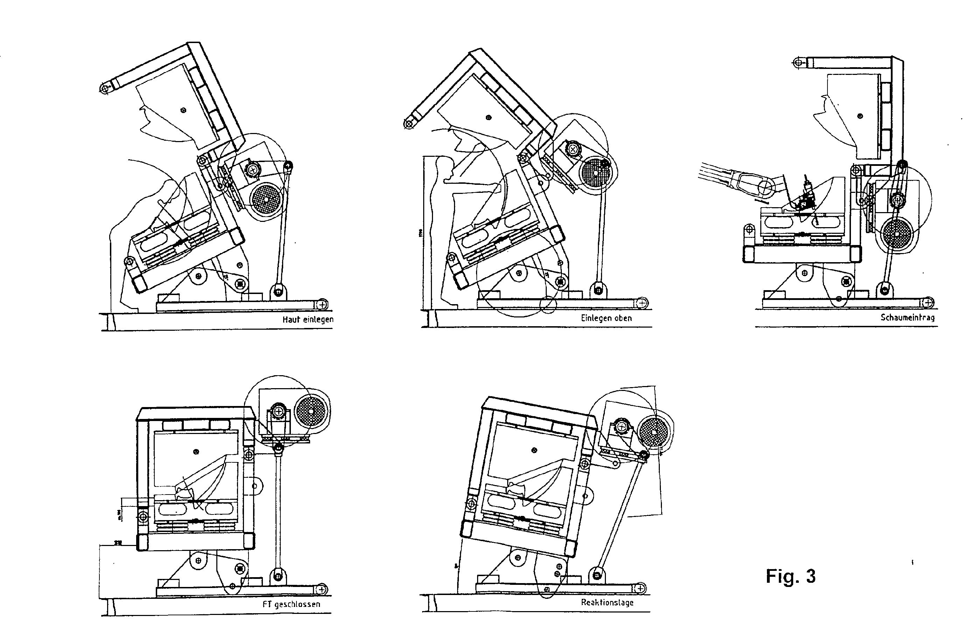

Die Fig. 3 - 7 zeigen weitere Ausführungsbeispiele der Erfindung. Da diese Ausführungsbeispiele sich nicht grundsätzlich vom ersten Ausführungsbeispiel unterscheiden, werden im folgenden nur die Unterschiede erläutert.

Gemäß Fig. 3 befindet sich die Schwenkachse des Schwenklagers 8 unterhalb der unteren Formaufspannplatte, und eine der Verriegelungslasche 12 entsprechende Verriegelungslasche ist ebenfalls unterhalb der unteren Formaufspannplatte 2 angeordnet und wirkt mit dem Hauptträger zusammen, nicht mit der Stütze.

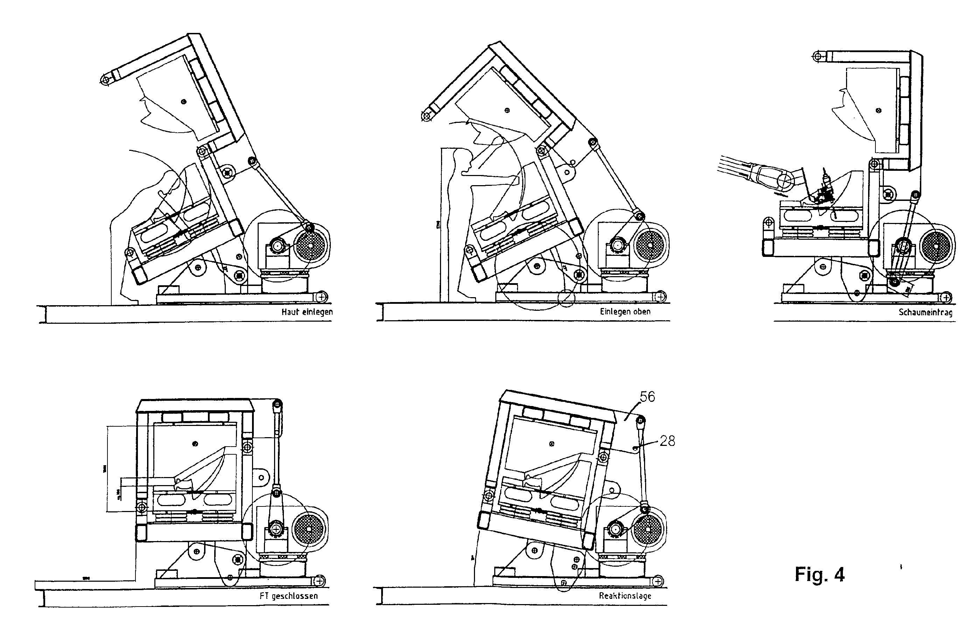

Gemäß Fig. 4 ist der Antrieb mit der Kurbel am Maschinenbett 10 angeordnet, und der Hebel 42 greift an einer Lasche 56 an, die auch die Verriegelungsöffnung 28 aufweist. Es handelt sich hiermit um eine kinematische Umkehr der Funktionsweise der Vorrichtungen gemäß Fig. 2 und Fig. 3.

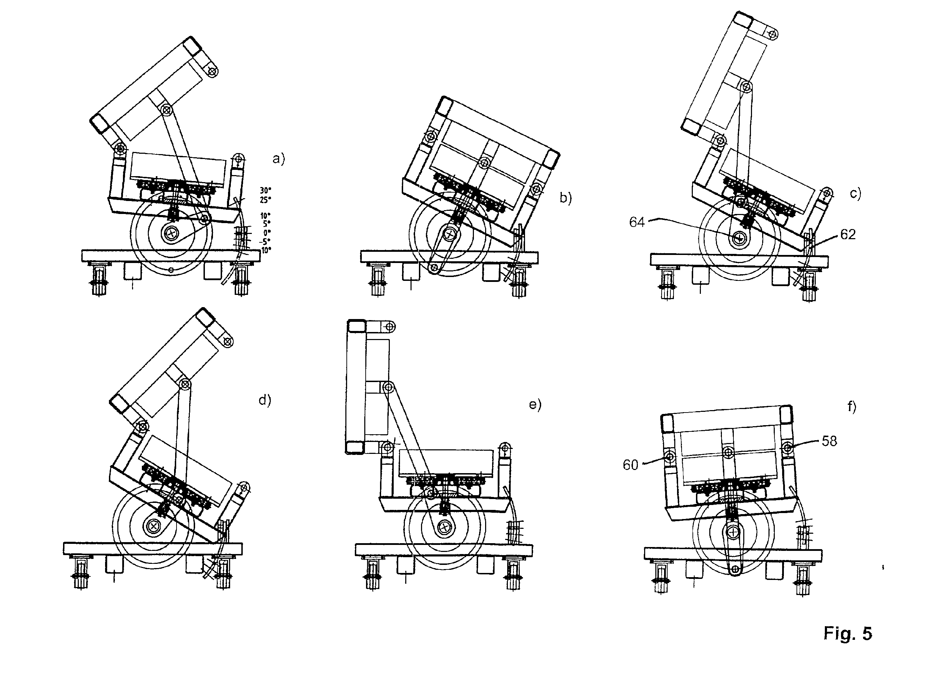

Fig. 5 zeigt eine Variante, bei der die Schwenkachse mittig unterhalb der Formaufspannplatte angeordnet ist und der Hebel 42 etwa mittig an der oberen Formaufspannplatte angreift. Bei dieser Anordnung schwenkt die untere Formaufspannplatte um die Drehachse 64 des Kurbelarms 38, wobei in der gestauchten Totpunktstellung (Hebel 42 und Kurbelarm 38 überdecken sich) die geschlossene Schließeinheit verschwenkt werden kann (Fig. 5b), in der gestreckten Totpunktstellung die geöffnete Form (Fig. 5c). Dabei sind zum gemeinsamen Verschwenken der Formaufspannplatten wie in den vorstehenden Beispielen aneinander verriegelt.

In dem Ausführungsbeispiel der Fig. 5 sind die Formaufspannplatten jeweils etwa symmetrisch aufgebaut und umfassen vorzugsweise lösbare Schwenklager 58 und 60. Durch Lösen eines der Schwenklager 58, 60 kann die Schließeinheit zu der entsprechenden Seite geöffnet werden, so dass während eines Produktionsprozesses bei Bedarf die Schließeinheit von jeder Seite aus zugänglich ist. Des weiteren zeigt Fig. 5 Federn 62 die zur Kompensation bzw. Reduktion eines Bewegungsmoments der Schließeinheit dienen.

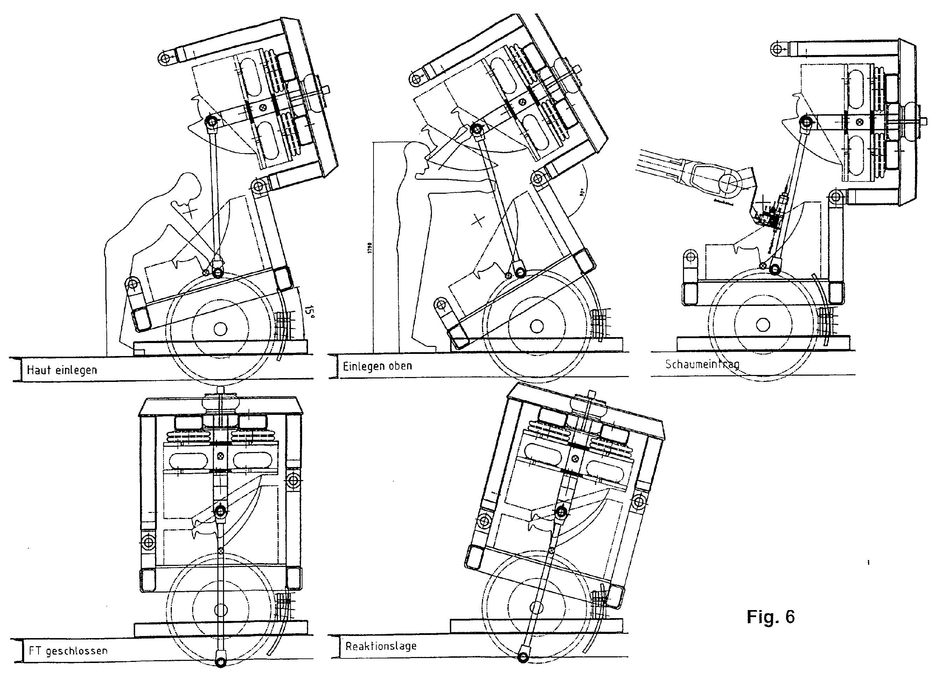

Fig. 6 zeigt die Umsetzung eines mittigen Antriebs zusammen mit Formaufspannplatten, die entsprechend dem Ausführungsbeispiel der Fig. 1 ausgebildet sind.

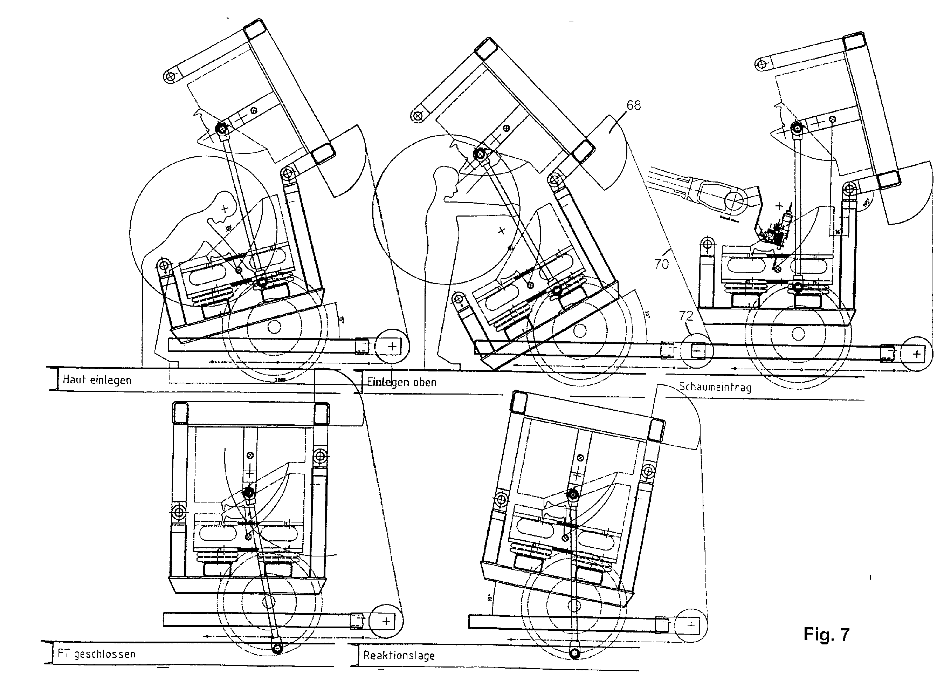

Schließlich zeigt Fig. 7 eine Ausführungsform, bei der die Schwenkachse des Kurbelarms unterhalb der unteren Formaufspannplatte, außerhalb der Mitte angeordnet ist. Des weiteren zeigt diese Figur ein Ausgleichsgewicht 68 an der oberen Formaufspannplatte 4 und Spannmittel 70, 72 zur Unterstützung des Antriebs bzw. zur Kompensation von Bewegungsmomenten.

Wie in den Figuren dargestellt, kann die Parallelhubeinheit 34 in der unteren Formaufspannplatte 2 oder in der oberen Formaufspannplatte 4 angeordnet sein.

Als Antrieb für den Kurbelarm wird vorzugsweise ein Elektromotor eingesetzt, andere Antriebe wie Hydraulik- oder Pneumatikmotoren sind jedoch auch möglich. Ferner muss der Kurbelarm nicht direkt angetrieben werden; Getriebe, Transmissionen o. dgl. können zwischengestellt werden.

## Patentansprüche

1. Schließeinheit einer Kunststoff-Formmaschine mit einer ersten Formaufspannplatte (2) und einer zweiten Formaufspannplatte (4), die mit einer Antriebsvorrichtung zwischen einer Öffnungsstellung und einer Verschlussstellung relativ zueinander bewegbar sind, **dadurch gekennzeichnet, dass** die Antriebsvorrichtung einen Kurbelantrieb (38, 42) aufweist.

2. Schließeinheit nach Anspruch 1, **dadurch gekennzeichnet, dass** die Verschlussstellung einer Totpunktstellung des Kurbelantriebs (38, 42) entspricht.

3. Schließeinheit nach Anspruch 1 und 2, **dadurch gekennzeichnet , dass** die Öffnungsstellung einer weiteren Totpunktstellung des Kurbelantriebs (38, 42) entspricht.

4. Schließeinheit nach Anspruch 1, 2 oder 3, **dadurch gekennzeichnet , dass** der Kurbelantrieb einen Antriebsstrang aus einem angetriebenen Kurbelarm (38) und einem Hebel (42) aufweist, die gelenkig miteinander verbunden sind, wobei ein Ende des Antriebsstrangs mit der zweiten Formaufspannplatte (4) und das andere Ende mit der ersten Formaufspannplatte (2) oder einer Stütze (48) verbunden ist.

5. Schließeinheit nach Anspruch 4, **dadurch gekennzeichnet , dass** der Antriebsstrang an der zweiten Formaufspannplatte (4) seitlich eines Schwenklagers (22) angreift.

6. Schließeinheit nach Anspruch 4, **dadurch gekennzeichnet, dass** der Antriebsstrang an der zweiten Formaufspannplatte (4) etwa mittig zwischen zwei Seiten der Formaufspannplatte angreift.

7. Schließeinheit nach einem der Ansprüche 1 bis 4 oder 6, **dadurch gekennzeichnet, dass** die Formaufspannplatten (2, 4) über ein Schwenklager (22) miteinander verbunden sind.

8. Schließeinheit nach einem der Ansprüche 1 bis 7, **gekennzeichnet durch** Verschluss-Riegelelemente (24) zum lösbaren Verriegeln der Formaufspannplatten in der Verschlussstellung.

9. Schließeinheit nach einem der Ansprüche 1 bis 8, **gekennzeichnet durch** Öffnungs-Riegelelemente (26, 18) zum lösbaren Verriegeln der Formaufspannplatten in der Öffnungsstellung.

10. Schließeinheit nach einem der Ansprüche 1 bis 9, **dadurch gekennzeichnet, dass** die erste Formaufspannplatte (2) schwenkbar gegen ein Maschinenbett (10) gelagert ist.

11. Schließeinheit nach Anspruch 10, **dadurch gekennzeichnet, dass** die erste Formaufspannplatte (2) in mindestens einer Schwenkposition arretierbar ist.

12. Schließeinheit nach einem der Ansprüche 1 bis 4, **gekennzeichnet durch** zwei lösbare Schwenklager (58, 60), die an gegenüberliegenden Seiten der Formaufspannplatten angeordnet sind.

13. Schließeinheit nach einem der Ansprüche 1 bis 12, **gekennzeichnet durch** mehrere Kurbelantriebe.

14. Schließeinheit nach Anspruch 13, **dadurch gekennzeichnet, dass** ein einziger Motor mehrere Kurbelantriebe antreibt.

15. Reaktionsgießmaschine mit einer Schließeinheit nach einem der vorstehenden Ansprüche.
